# EUROPEAN PATENT APPLICATION

(11) **EP 3 476 853 A1**
(43) Date of publication of application: **01.05.2019**
(21) Application number: 17306473.4
(22) Date of filing: 26.10.2017
(51) Int. Cl.: C07F 9/6571, C08G 63/692, C08G 69/42, C08L 77/06

(54) **FLAME-RETARDANT POLYMER; METHOD FOR PREPARING IT AND THERMOPLASTIC POLYMER COMPOSITION COMPRISING IT**

(71) Applicant: RHODIA OPERATIONS, 75009 Paris (FR)
(72) Inventor: BADEL, Thierry, 69008 Lyon (FR)
(74) Representative: Chatelan, Florence Anne

(57) **Abstract**

The invention relates to a polymer which is useful as flame-retardant polymer. The invention also relates to a method of preparing said polymer and to a thermoplastic polymer composition comprising said polymer. The thermoplastic polymer composition can be used for the production of molded articles or yarns having excellent flame-retardant properties in order to ensure adequate fire protection.

## Description

### TECHNICAL FIELD OF THE INVENTION

The invention relates to a polymer which is useful as flame-retardant polymer. The invention also relates to a method of preparing said polymer and to a thermoplastic polymer composition comprising said polymer. The thermoplastic polymer composition can be used for the production of molded articles or yarns having excellent flame-retardant properties in order to ensure adequate fire protection.

### BACKGROUND

Flame-retardant polymer compositions are useful for the production of molded articles in a large number of application fields because of their excellent property profile. In many applications, it is important that the polymer composition has excellent flame-retardant properties in order to ensure adequate fire protection. In addition, it is, however, also important that the further physical properties, such as e.g. tensile modus, tear strength and breaking elongation, fulfill the prescribed requirements for the respective application cases.

While it is possible to impart fire-retardant properties to a polymer by incorporating certain monomers within the polymer backbone as described in CN 105585710 A with respect to a DOPO based phosphorous flame-retardant/hexamethylenediamine salt solution used in the preparation of polyamide 66, this approach has the disadvantage that there is no flexibility with regard to the specific polymer composition for final use. Additionally, the present inventors found that the copolymerization of polyamides and flame-retardant monomers can adversely impact on the physical properties of the final polymer, such as its melt viscosity. Therefore, flame retardants are usually added to polymeric materials to enhance the flame-retardant properties of the polymers. This approach provides high flexibility with regard to the polymeric materials although there are also limitations with respect to the required compatibility of the used flame retardant with the polymeric materials. Furthermore, for the production of flame-retardant thermoplastic polymers, it is desirable for economic reasons to use non-reactive flame retardants, since the latter can be introduced into a base polymer by a simple physical mixing or dissolution. In contrast thereto, the production of flame-retardant thermoplastic polymers using reactive flame retardants always requires at least one or more chemical process steps which are usually carried out already during the production of the base polymer.

For the production of thermoplastic polymer compositions finished to be flame-retarding, a large number of non-reactive flame-retardants has already been in technical use for a long time. However, these are based in most cases on halogen- or antimony-containing substances which recently have come under public criticism due to their negative eco- and genotoxicologic potential. For this reason, halogen- and antimony-free non-reactive flame retardants are increasingly used, such as, e.g., red phosphor, melamine polyphosphate, melamine cyanurate or aluminum phosphinates, as are described in EP-A 1 070 454.

However, the aforementioned flame retardants are only partly suitable for use in melt spinning processes employed for the production of polyamide or polyester fibers. The halogenated flame retardants can considerably damage the spinning nozzle under the temperature and pressure conditions used during spinning. In contrast thereto, melamine polyphosphate, melamine cyanurate or aluminum phosphinates are only insufficiently soluble in polyamides or polyesters, which results in an inhomogeneous distribution of the flame retardant in the base polymer. This leads to considerable drawbacks in particular in the melt-spinning process, since a clogging of the spinning nozzle is caused.

Phosphoric flame retardants, which are obtained by addition reaction of 9,10-dihydro-9-oxa-10-phosphaphenanthrene-10-oxide (DOPO) to an unsaturated compound having at least one ester forming functional group, and by further reaction with an esterifying compound, which is selected from di- and multivalent alcohols are disclosed in US 2010/0181696 A1 and US 2013/0136911 A1. It is said that these halogen-free flame retardants are not toxic and can be processed easily together with thermoplastic molding compositions at high temperatures in a melt-spinning process or other extrusion processes.

There is nevertheless still a need for flame-retardant polymers with improved properties that can be used in different polymer substrates. It is particularly desirable to provide flame-retardant polymers exhibiting a high chemical stability and a good solubility in thermoplastic base polymers which allows productions of, for example, fibers, molded articles or films from a composition comprising the flame-retardant polymer and the thermoplastic base polymer at high temperatures, such as by melt spinning or other extrusion processes. Furthermore, it is desirable that the flame-retardant polymer can be distributed homogenously in the base polymer by a simple physical mixing under conditions which are usual in a melt-spinning, extrusion or injection-molding process. The flame-retardant polymer should have low tendency to migrate out of the base polymer and, thus, produce a permanent flame-retarding effect.

Furthermore, there is still a need for flame-retardant polymers which exhibit improved flame-retardant properties compared to known flame retardants. An increased flame-retardant effectivity would allow to either produce an article having improved flame-retardancy using the same amount of flame-retardant polymer or to produce an article having the same flame-retardancy as prior art articles but requiring the incorporation of only less flame-retardant polymer. Reducing the required amount of flame-retardant polymer, minimizes the influence on the physical properties of the base polymer. This ensures reliable processing during extrusion, injection-molding or melt-spinning processes and the following process steps, such as stretching, texturing and dying.

### SUMMARY

The present inventors now found that one or more of the above objects can be achieved by a polymer obtainable by polycondensation of a first monomer, which is an adduct of DOPO with an unsaturated di- or multivalent carboxylic acid, and a secondary diamine. An aspect of the present invention therefore provides a polymer, obtainable by polycondensation of
a) at least one phosphorous-containing monomer selected from adducts of
   a1) 9,10-dihydro-9-oxa-10-phosphaphenanthrene-10-oxide (DOPO) and/or nuclear substituted DOPO derivatives, with
   a2) at least one unsaturated di- or multivalent carboxylic acid or ester or anhydride thereof;
b) at least one secondary diamine; and
c) optionally other monomers.

The polymer of the present invention differs from halogen-free DOPO-based flame retardants of the prior art in that the second monomer used in the polycondensation reaction is a secondary diamine, while in the prior art aliphatic di- and polyvalent alcohols were used. The inventors surprisingly found that incorporation of a secondary diamine in the polymer increases the flame-retardant properties of the polymer without affecting the compatibility of the polymer with other polymer substrates. This allows reducing the amount of the flame-retardant polymer in a thermoplastic polymer composition without deteriorating the flame-retardant properties of the final product.

Another aspect of the present invention relates to a method of preparing the above flame-retardant polymer by reacting DOPO or a DOPO derivative with an unsaturated di- or multivalent carboxylic acid or ester or anhydride thereof and subsequently with at least one secondary diamine.

Another aspect of the present invention relates to a thermoplastic polymer composition comprising a thermoplastic polymer and the above flame-retardant polymer.

### DETAILED DESCRIPTION

### Definitions

In the present description, wherein an element or composition is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components.

Further, it should be understood that elements and/or features of an apparatus, a process or method described herein can be combined in a variety of ways without departing from the scope and disclosures of the present teachings, whether explicit or implicit herein.

The term "thermoplastic polymer" shall mean a polymer that becomes pliable or moldable above a specific temperature, so is capable of flow at high temperatures below the thermal decomposition temperature and returns to a solid state upon cooling. A polymer is a macromolecular compound prepared by reacting (i.e., polymerizing, condensation) monomers of the same or different type, including homo- and copolymers. Thermoplastic materials are made by chain polymerization, polyaddition and / or polycondensation.

The term "comprising" includes "consisting essentially of" and "consisting of".

In the present specification, the description of a range of values for a variable, defined by a bottom limit, or a top limit, or by a bottom limit and a top limit, also comprises the embodiments in which the variable is chosen, respectively, within the value range: excluding the bottom limit, or excluding the top limit, or excluding the bottom limit and the top limit.

In the present specification, the description of several successive ranges of values for the same variable also comprises the description of embodiments where the variable is chosen in any other intermediate range included in the successive ranges. Thus, for example, when it is indicated that "the magnitude X is generally at least 10, advantageously at least 15", the present description also describes the embodiment where: "the magnitude X is at least 11", or also the embodiment where: "the magnitude X is at least 13.74", etc.; 11 or 13.74 being values included between 10 and 15.

In the present specification, the choice of an element from a group of elements also explicitly describes :
- the choice of two or the choice of several elements from the group,
- the choice of an element from a subgroup of elements consisting of the group of elements from which one or more elements have been removed.

A plurality of elements includes two or more elements.

The phrase 'A and/or B' refers to the following selections: element A; or element B; or combination of elements A and B (A+B). The phrase 'A and/or B' is equivalent to at least one of A and B. The phrase 'A and/or B' equates to at least one of A and B.

The phrase 'A1, A2, ... and/or An' with n ≥ 3 includes the following choices: any single element Ai (i= 1, 2, ...n); or any sub-combinations of from two to (n-1) elements chosen from A1, A2, ..., An; or combination of all elements Ai (i=1, 2, ... n). For example, the phrase `A1, A2, and/or A3' refers to the following choices: A1; A2; A3; A1+A2; A1+A3; A2+A3; or A1+A2+A3.

The use of the singular 'a' or 'one' herein includes the plural unless specifically stated otherwise. By way of example, "a multivalent alcohol" denotes one multivalent alcohol or more than one multivalent alcohol.

In addition, if the term "about" or "*ca.*" is used before a quantitative value, the present teachings also include the specific quantitative value itself, unless specifically stated otherwise. As used herein, the term "about" or "*ca.*" refers to a +-10% variation from the nominal value unless specifically stated otherwise.

### FLAME-RETARDANT POLYMER

One aspect of the present invention relates to a flame-retardant polymer, which is obtainable by polycondensation of
a) at least one phosphorous-containing monomer selected from adducts of
   a1) 9,10-dihydro-9-oxa-10-phosphaphenanthrene-10-oxide (DOPO) and/or nuclear substituted DOPO derivatives, with
   a2) at least one unsaturated di- or multivalent carboxylic acid or ester or anhydride thereof;
b) at least one secondary diamine; and
c) optionally other monomers with the exception of unsaturated di- or multivalent carboxylic acids.

In a preferred embodiment, the flame-retardant polymer is halogen-free.

It is preferred that the flame-retardant polymer of the invention has a high phosphorous content of at least 4.0 % by weight. Throughout this description, the phosphorous content is given in % by weight based on the total weight of the polymer. In more preferred embodiments, the polymer has a phosphorous content of at least 5.0 % by weight, more preferably at least 5.8 % by weight, even more preferably at least 7.0 % by weight, such as at least 7.5 % by weight. The upper limit of the phosphorous content in the polymer of the invention is not particularly limited and depends on the monomers used. Generally, the phosphorous content should not be above 15 % by weight, preferably at a maximum of 10 % by weight, more preferably at a maximum of 9% by weight and even more preferably at a maximum of 8 % by weight. The given lower and upper limits of the phosphorous content can be combined with each other. Suitable ranges are, for example, at least 4.0 % to about 15 % by weight and about 5.0 % to about 9 % by weight. Other combinations of lower and upper limits are possible as well. In preferred embodiments, the phosphorous content is about 5.0 % to about 15 % by weight, more preferably about 5.8 % to about 10 % by weight, even more preferably about 7.0 % to about 9 % by weight, and most preferably about 7.5 % to about 8 % by weight, each of the total weight of the polymer.

In the polycondensation reaction, which makes the polymer of the present invention obtainable, a first phosphorous-containing monomer a) is used. This monomer is an adduct of 9,10-dihydro-9-oxa-10-phosphaphenanthrene-10-oxide (DOPO) and/or nuclear substituted DOPO derivatives with at least one unsaturated di- or multivalent carboxylic acid or ester or anhydride thereof. DOPO has the following chemical structure:

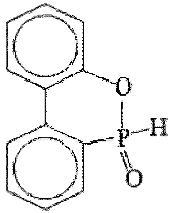

"Nuclear substituted DOPO derivatives" denotes DOPO derivatives which bear one or more substituents on the aromatic rings of DOPO. Each ring may bear 0 to 4 substituents, which can for example be selected from alkyl, alkoxy, aryl, aryloxy and aralkyl. The alkyl moiety in alkyl, alkoxy and aralkyl may have, for example, 1 to 30 carbon atoms, which may be linear, branched or cyclic and which may be saturated or unsaturated, preferably saturated. The aryl in aryl, aryloxy and aralkyl may, for example, comprise 6 to 30 carbon atoms, such as phenyl and naphthyl. If the DOPO molecule bears more than one nuclear substituent, these substituents may be identical or different to each other.

To obtain the first phosphorous-containing monomer a), the DOPO and/or nuclear substituted DOPO derivatives are reacted with at least one unsaturated di- or multivalent carboxylic acid or ester or anhydride thereof to form an adduct. This adduct formation is shown in the following reaction scheme by way of example using DOPO and itaconic acid as unsaturated dicarboxylic acid. It is, however, to be understood that instead of DOPO, nuclear substituted DOPO derivatives and instead of itaconic acid, other di- or multivalent unsaturated carboxylic acids or esters or anhydrides thereof may be used.

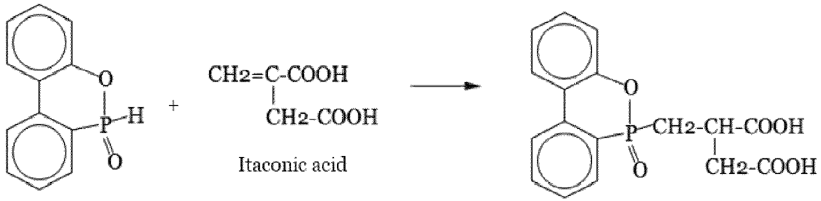

In one embodiment of the present invention, the unsaturated di- or multivalent carboxylic acid or ester or anhydride thereof is a divalent carboxylic acid or ester or anhydride thereof. In a preferred embodiment, the divalent carboxylic acid or ester or anhydride thereof is selected from the group consisting of itaconic acid, maleic acid, fumaric acid, endomethylene tetrathydrophthalic acid, citraconic acid, mesaconic acid, and tetrathydrophthalic acid and esters and anhydrides thereof. Itaconic acid and maleic acid and anhydrides thereof being particularly preferred.

In one embodiment of the present invention, the phosphorous-containing monomer a) can be selected from a compound represented by the following general formula (I): 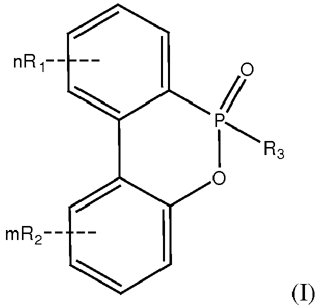 wherein n and m are integers from 0 to 4;
R₁ and R₂ are independently selected from alkyl, alkoxy, aryl, aryloxy and aralkyl, wherein, if more than one of R₁ and/or R₂ are present, each of these substituents can be identical or different to each other; and R₃ denotes a residue derived from the unsaturated di- or multivalent carboxylic acid or ester or anhydride thereof.

R₁ and R₂ are preferably defined as above with respect to the definition of the nuclear substituted DOPO derivatives. In a preferred embodiment, R₁ and R₂ are independently selected from C₁₋₈ alkyl and C₁₋₈ alkoxy; and n and m are independently 0 or 1.

In order to facilitate a high thermal stability of the final flame-retardant polymer, it is preferred that the first phosphorous-containing monomer a) does not contain any carbon carbon double or triple bonds except aromatic bonds.

Using the above described first phosphorous-containing monomer a), the flame-retardant polymer of the invention can be obtained by polycondensation with at least one secondary diamine. This polycondensation reaction results in a polyamide.

In one embodiment, the secondary diamine b) is a compound represented by the following general formula (II): 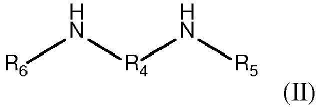 wherein R₄, R₅ and R₆ independently represent hydrocarbon residues which may contain one or more heteroatoms and which may form one or more rings with themselves or any of each other of R₄, R₅ and/or R₆.

The secondary diamine b) in a preferred embodiment does not contain any primary amine group. In a further embodiment, the secondary diamine b) may contain one or more tertiary amine groups.

In the above compound of general formula (II) R₄, R₅ and R₆ may independently represent aryl, heteroaryl or linear, branched and/or cyclic C₁₋₃₀ alkyl residues, or any combination thereof, wherein the C₁₋₃₀ alkyl residues may be substituted or interrupted by one or more heteroatoms, such as O, N, S or P, and/or one or more aryl groups. Suitable aryl residues are for example phenyl and naphthyl. Suitable heteroaryl residues are for example pyrrolyl and isoquinolinyl. Suitable alkyl residues are in particular C₁₋₂₀ alkyl residues and more preferably C₁₋₁₈ alkyl residues. Combinations of these residues are for example benzyl, bisphenoxy, biphenyl and methylenebiphenyl.

In one embodiment, R₄ may be arylene or linear, branched and/or cyclic C₁₋₂₀ alkylene, or any combination thereof, wherein the C₁₋₂₀ alkylene may be interrupted by one or more heteroatoms, preferably selected from N and O, wherein, if the heteroatom is N, it preferably forms a tertiary amine, more preferably -N(C₁₋₆ alkyl)-. Examples of R₄ are linear C₁₋₁₀ alkylene, cyclohexylene, in particular 1,2-cyclohexylene, and C₁₋₃ alkylene-N(C₁₋₆ alkyl)-C₁₋₃ alkylene.

In one embodiment, R₅ and R₆ independently represent aryl, C₁₋₃ alkylaryl, or linear, branched and/or cyclic C₁₋₆ alkyl, or R₅ and R₆ together have 1 to 3 carbon atoms and form a ring together with -NH-R₄-NH-, or R₄ and/or R₅ represent a C₁₋₃ alkylene residue forming a ring together with R₄. Examples for aryl are phenyl and naphthyl. An example for C₁₋₃ alkylaryl is benzyl. Examples for linear, branched and/or cyclic C₁₋₆ alkyl are in particular methyl, ethyl, propyl, isopropyl, butyl, tert-butyl, and cyclohexyl. An example where R₅ and R₆ together have 1 to 3 carbon atoms and form a ring together with -NH-R₄-NH-is piperazine. Examples where R₄ and/or R₅ represent a C₁₋₃ alkylene residue forming a ring together with R₄ are 4,4'-trimethylenedipiperidine, 4,4'-dimethylenedipiperidine and 4,4'-dipiperidine.

In one embodiment, the secondary diamine b) is selected from the group consisting of 4,4'-bipiperidine, piperazine, 4,4'-ethylenedipiperidine, N,N'-dimethyl-1,6-hexanediamine, N,N'-dimethyl-1,8-octanediamine, N,N'-diethyl-1,3-propanediamine, N,N'-dimethyl-1,3-propanediamine, N,N'-diisopropyl-1,3-propanediamine, N,N'-diethylethylenediamine, N,N'-dimethylethylenediamine, N,N'-diisopropylethylenediamine, N,N'-diphenylethylenediamine, N,N'-dibenzylethylenediamine, trans-N,N'-dimethylcyclohexane-1,2-diamine, N,N-bis[3-(methylamino)propyl]methylamine, and 4,4'-trimethylenedipiperidine, or salt thereof or mixture thereof. 4,4'-etyhelendipiperidine, 4,4'-trimethylenedipiperidine and piperazine are particularly preferred. Piperazine is even more preferred.

In one embodiment of the present invention, the flame-retardant polymer is obtainable by reacting DOPO with itaconic acid to form the first phosphorous-containing monomer a), which is then reacted with a secondary diamine of above general formula (II) to form a polyamide having repeating units represented by the following general formula (III): 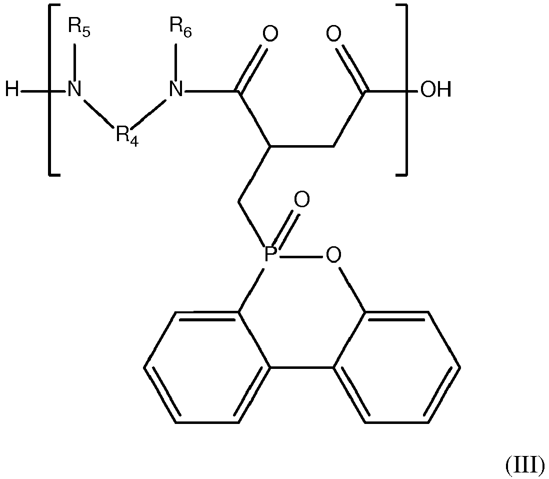 wherein R₄, R₅ and R₆ are defined as above.

In a preferred embodiment of the invention, the flame-retardant polymer having repeating units represented by the above general formula (III) is obtained using a secondary diamine or formula (II) being selected from the group consisting of 4,4'-ethylenedipiperidine, 4,4'-trimethylenedipioperidine and piperazine. Piperazine being even more preferred.

The above described flame-retardant polymer may optionally comprise other monomer residues in addition to the first phosphorous-containing monomer a) and the second diamine containing monomer b). These other monomers are not particularly limited as long as they can react with the first monomer a) and the second monomer b) to form a polymer. Preferably, the other monomer does not contain any carbon carbon double or triple bond except aromatic bonds in order to obtain a final flame-retardant polymer of high thermal stability.

The "other monomers" c) can be selected or example from di- and multivalent carboxylic acids and di- or multivalent amines, which may or may not comprise phosphorous atoms or other heteroatoms, such as oxygen, nitrogen and sulfur. Other monomers, which can for example form block copolymers with the polyamide units of monomers a) and b), may be used.

As a reasonably high phosphorous content of the flame-retardant polymer of the invention is desired, the amount of "other monomers" in the polymer should be low, in particular if the other monomers do not contain any phosphorous atoms. It can therefore be of advantage if, for example, less than 20 %, preferably less than 10% and even more preferably less than 5 % of the monomer residues of the polymer are residues of "other monomers" c). In a preferred embodiment, the flame-retardant polymer of the invention does not contain any "other monomers" c).

If present, "other monomers" c) can, for example, be selected from carboxyphosphinic acid derivatives, such as carboxyethyl-phenylphosphinic acid (CEPPA) and carboxyethyl-methylphosphinic acid (CEMPA), aminophosphinic acid derivatives making an amide bond by polycondensation, such as aminomethyl phosphinic acid (AMPA), biscarboxyphosphine oxide derivatives, such as bis(beta-carboxyethyl)methylphopsphine oxide (CEMPO), bisaminophosphine oxide derivatives making an amide bond by polycondensation, such as bis(3-aminopropyl)methylphosphine oxide (AMPO), multivalent carboxylic acids, such as terephthalic acid, isophthalic acid, phthalic acid, sebacic acid, adipic acid, glutaric acid and succinic acid.

To improve the compatibility with the thermoplastic polymers, the flame-retardant polymer according to the invention can be end-capped by reaction with a monovalent secondary amine and/or a monovalent carboxylic acid.

The chemical and physical properties of the polymer according to the invention can be influenced by selecting di- or multivalent monomers. If only divalent monomers are employed, no cross-linking between the polymer backbones occurs. If multivalent monomers are used, cross-linking could occur. By selecting a suitable ratio between di- and multivalent monomers, the degree of cross-linking and thus the properties of the polymer can be tailored.

The average molecular weight Mn of the polymer according to the invention can be above 1,000 g/mol, such as above 3,000 g/mol or even above 5,000 g/mol. The average degree of polymerization of the polyamide amounts to, for example, at least 5, preferably at least 15, even preferably at least 25.

In one embodiment, the flame-retardant polymer according to the invention preferably has a viscosity close to the temperature of processing of the final thermoplastic polymer composition (such as for example 280°C). At this viscosity, an optimum processibility of the polyamide of the invention in the melt-spinning process and other extrusion processes is obtained. The desired viscosity can be adjusted by an accurate monitoring of the average molecular weight Mn, the average degree of polymerization DPn and/or the degree of branching of the polyamide of the invention.

The chemical and physical properties of the flame-retardant polymer according to the invention can further be influenced by the temperature and time of polycondensation, the catalyst used and the addition of, for example, chain prolongation and chain branching monomers. Heat stabilizers may also be added. To improve the color of the flame-retardant polymer according to the invention, it is further possible to use known optical brightening agents.

A further embodiment of the present invention relates to a method of preparing the above described flame-retardant polymer. This method comprises the steps of
a) reacting 9,10-dihydro-9-oxa-10-phosphaphenanthrene-10-oxide (DOPO) and/or nuclear substituted derivatives thereof with at least one unsaturated di- or multivalent carboxylic acid or ester or anhydride thereof to obtain a first phosphorous-containing monomer;
b) reacting the first phosphorous-containing monomer obtained in step a) with at least one secondary diamine of formula (II); and
c) optionally carrying out the reaction in step b) in the presence of at least one monovalent carboxylic acid and/or monovalent secondary amine and /or reacting the polymer obtained in step b) with at least one monovalent carboxylic acid and/or monovalent secondary amine to obtain an end-capped polymer.

Suitable reaction conditions and in particular polycondensation conditions are known to the person skilled in the art. Useful specific parameters are exemplified in the examples below.

The flame-retardant polymer according to the invention is particularly suitable to impart flame-retardant properties to a thermoplastic polymer composition. Therefore, in a further embodiment, the present invention relates to a thermoplastic polymer composition comprising a thermoplastic polymer and a flame-retardant polymer as described above.

The thermoplastic polymer in the thermoplastic polymer composition can be selected from a broad variety of polymers, in particular synthetic polymers, including homopolymers, copolymers and block copolymers. Also mixtures of one or more thermoplastic polymers may be used. A list of suitable synthetic polymers is, for example, disclosed in WO 2008/119693 A1, the content of which is incorporated herein by reference. Specific examples of suitable thermoplastic polymers are, for example, polyamides, polyphthalamides, polyesters including unsaturated polyester resins, polysulfones, polyimides, polyolefins, polyacrylates, polyether etherketones, acrylnitril butadiene styrenes (ABS), polyurethanes, polystyrenes, polycarbonates, polyphenylene oxides, phenolic resins and mixtures thereof.

In a preferred embodiment, the thermoplastic polymer is a polyamide, such as a polyamide that is suitable for melt spinning or other molding processes. The polyamide can, for example, be selected from the group consisting of PA 6.6, PA 6, PA 6.10, PA 6.12, PA MXD.6, PA 11 and PA 12. Copolyamides, such as PA 6.6/6 and PA 6.6/6.T and blends of polyamides, such as PA 6.6/PA 6 and PA 6.6/PA 6.10 are suitable as well.

The amount of flame-retardant polymer in the thermoplastic polymer composition according to the invention is not particularly limited and can be selected by a person skilled in the art according to the requirements. In one embodiment, the thermoplastic polymer composition comprises at least 0.1 % by weight, preferably at least 2 % by weight of the flame-retardant polymer based on the total weight of the thermoplastic polymer composition. For example, the thermoplastic polymer composition can comprise from about 0.1 % to about 30 % by weight, preferably from about 2 % to about 25 % by weight, even more preferably from about 6 % to about 20 % by weight of the flame-retardant polymer, based on the total weight of the thermoplastic polymer composition.

In another embodiment, the thermoplastic polymer composition can comprise the flame-retardant polymer in an amount such that the final thermoplastic polymer composition has a phosphorous content of from about 0.1 % to about 4 % by weight, preferably of from about 0.1 % to about 2 % by weight, in particular of from about 0.5 % to about 1 % by weight, based on the total weight of the thermoplastic polymer composition.

It is also possible to first prepare a master batch of a thermoplastic polymer composition containing a higher phosphorous content of up to, for example, about 5 % by weight of the total weight of the composition and then add this master batch to another thermoplastic polymer composition for tailoring its properties.

For example, to produce flame-retardant polymer fibers, the flame-retardant polymer according to the invention can physically be mixed with an appropriate polyamide in the melt, and the mixture is then either directly spun as a polymer mixture having a phosphorous content of between about 0.1 % and about 1 % by weight, so as to form filaments, or, the mixture is then tailored in terms of a master batch having a phosphorous content of between about 2 % and about 5 % by weight, and is then added to the same or a different type of polyamide and spun to filaments in a second process step.

Polymer fibers produced in a melt-spinning process from a thermoplastic polymer composition of the present invention preferably have a total phosphorous content of from about 0.1 % to about 2 % by weight, in particular of from about 0.5 to about 1 % by weight, based on the total weight of the thermoplastic polymer composition, and they are therefore sufficiently flameproof.

All aforementioned polyamides can be finished in an excellent manner to be flame-retarding with the aforementioned flame-retardant polymer by a simple physical mixing of the polymer melts under conditions as are usual in the melt-spinning process. When using the flame-retardant polymer according to the invention, important polymer properties, such as the melt viscosity, the melting point of the polymer composition obtained after mixing are changed only to an extent that a reliable processing, such as a melt spinning remains entirely ensured.

The thermoplastic polymer composition of the present invention may additionally comprise other flame retardants or additives known to a person skilled in the art, in particular those flame retardants and additives which are used in the preparation of fibers. Suitable other flame-retardants are, for example, melamine cyanurate, melamine polyphosphate, ammonium polyphosphate and metal stannates, preferably zinc stannate, metal borates such as zinc borate, polyhedral oligomeric silsesquioxanes (for example trade name POSS of Hybrid Plastics), and so-called nanoclays based on the exfoliated phyllosilicates montmorillonite and bentonite, such as, e.g., the products Nanomer of Nanocor, or Nanofil of Südchemie, and inorganic metal hydroxides such as the products Magnifin or Martinal of Martinswerk. Due to the use of these additives, parameters that are important to the flame-retarding properties can be modified, for example the characteristic cone calorimetric numbers TTI (time to ignition) can be increased, PHRR (peak of heat release rate) can be reduced and/or a desired suppression of the smoke gas generation can be improved.

Both, the flame-retardant polymer as well as the thermoplastic polymer composition according to the invention may comprise additional components, such as anti-dripping agents, polymer stabilizers, anti-oxidants, light stabilizers, peroxide scavengers, nucleating agents, fillers and reinforcing agents, and other additives, such as blend compatibilizing agents, plasticizers, lubricants, emulsifiers, pigments, rheology additives, catalysts, flow-control agents, optical brighteners, flame-proving agents, antistatic agents and blowing agents. Specific examples of these additives are disclosed in WO 2008/119693 A1, the content of which is incorporated herein by reference.

The invention will now be further described by the following examples, which are, however, not to be understood in a limiting sense.

### EXAMPLES

The following starting materials were used for production:
PA66 (Stabamid 26AE1)

Flame retardant: Ukanol FR 80 PU 30 (Schill+Seilacher), containing 8.0%w of phosphorus according to technical data sheet. Ukanol FR 80 is used in US 2013/0136911 A1 as flame retardant. It has the following chemical structure:

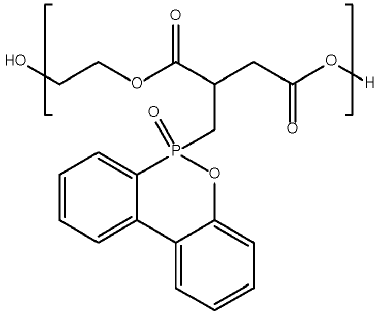

Lunastab DDP, (6-oxide-6H-dibenzo (c,e) (1,2) oxa-phosphorin-6-yl) butanedioic acid, CAS [63562-33-4].

Piperazine, 99%, from Sigma-Aldrich.

4,4'-Trimethylenedipiperidine, 97%, from Sigma-Aldrich.

The following measuring methods were used:
Melting, crystallization and glass transition temperatures determined by DSC, at 10°C/min.

Onset of thermal degradation temperature determined by TGA, at 10°C/min under nitrogen flow.

Phosphorus content by ICP/OES after sulfonitric mineralization.

Viscosity number in formic acid 90%, according to ISO 307.

Carboxylic acid End-Groups (CEG) concentration and Amine End-Groups
(AEG) concentration were determined by potentiometric titration (unit: meq/kg).

Melt viscosity is measured by a rheometer with a cone-plate geometry, at 280°C.

UL 94-V with 125 x 13 x 3 mm samples.

### Phosphorous containing polyamide

### Example 1: Production of a phosphorous containing polyamide according to the invention

113.6 g (0.33 mol) of Lunastab DDP represented by the following formula: 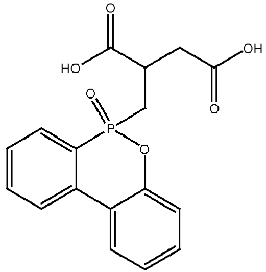 and 29.4 g (0.34 mol) of Piperazine represented by the following formula: 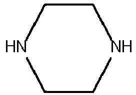 were poured with 60.0 g of demineralized water, 0.015 g of phosphoric acid 85% and antifoam in a stainless steel clave equipped with a mechanical stirrer with an internal thermometer. The clave atmosphere was purged with nitrogen, and the temperature was increased progressively to 220°C, with continuous stirring, letting pressure increase up to about 17.5 bar. The temperature was increased progressively up to 250°C, while maintaining the same level of pressure. The pressure was then progressively released while the temperature was increased to about 272°C. Vacuum was then applied to reach 300 mbar and kept for 30 min at the same temperature under continuous stirring. The vacuum was broken with nitrogen and the polymer was extruded in a strand. A glassy polymer was obtained which contained polyamide chains represented by the following formula: 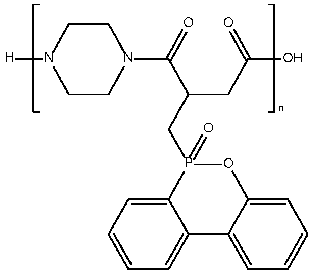 wherein n denotes the mole fraction of the polyamide repeating unit. The polymer thus obtained had the following analytical data:
The amorphous polyamide had a glass transition temperature of 189°C, and a thermal degradation onset of 381°C, and a char at 500°C of 35%.

The phosphorous content was 7.8%w.

End-groups titrations were as follow: CEG = 197 meq/kg, AEG = 112 meq/kg, corresponding to an estimated Mn of 6500 g/mol, i.e. a DPn of 33.

### Example 2: Production of a phosphorous containing polyamide according to the invention

Similarly to example 1, 93.31 g (0.27 mol) of Lunastab DDP and 56.7 g (0.27 mol) of 4,4'-Trimethylenedipiperidine represented by the following formula: 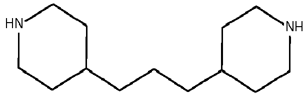 were polycondensed and the resulting polymer was extruded in a strand. A glassy polymer was obtained which contained polyamide chains represented by the following formula: 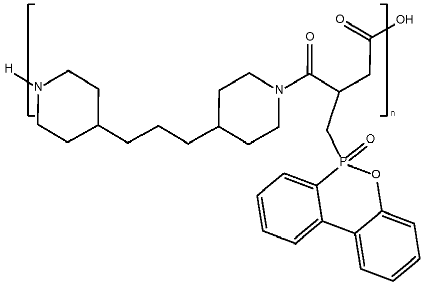 wherein n denotes the mole fraction of the polyamide repeating unit. The polymer thus obtained had the following analytical data:
The amorphous polyamide had a glass transition temperature of 145°C, and a thermal degradation onset of 398°C, and a char at 500°C of 19%.

The phosphorous content was 5.7%w.

End-groups titrations were as follow: CEG = 148 meq/kg, AEG = 19 meq/kg, corresponding to an estimated Mn of 12 000 g/mol, i.e. a DPn of 46.

The melt viscosity at 280°C under 100s-1 was 55 Pa.s.

### Example 3: Production of a phosphorous containing polyamide according to the invention

Similarly to example 1, 113.6 g (0.33 mol) of Lunastab DDP and 28.2 g (0.33 mol) of Piperazine were polycondensed and the resulting polymer was extruded in a strand. A glassy polymer was obtained. The amorphous polyamide had a glass transition temperature of 190°C, and a thermal degradation onset of 381°C, and a char at 500°C of 38%.

The phosphorous content was 7.2%w.

End-groups titrations were as follow: CEG = 303 meq/kg, AEG = 76 meq/kg, corresponding to an estimated Mn of 5300 g/mol, i.e. a DPn of 27.

The melt viscosity at 280°C under 100s-1 was 104 Pa.s.

### Example 4: Production of a phosphorous containing polyamide according to the invention

Similarly to example 1, 113.6 g (0.33 mol) of Lunastab DDP and 28.4 g (0.34 mol) of Piperazine were polycondensed with 0.049 g of phosphoric acid 85%, up to 282°C and the resulting polymer was extruded in a strand. A glassy polymer was obtained. The amorphous polyamide had a glass transition temperature of 190°C, and a thermal degradation onset of 387°C, and a char at 500°C of 36%.

End-groups titrations were as follow: CEG = 181 meq/kg, AEG = 97 meq/kg, corresponding to an estimated Mn of 7200 g/mol, i.e. a DPn of 36.

The melt viscosity at 280°C under 100s-1 was 72 Pa.s.

### Comparative Example 1: Production of a PA6.6

150.0 g (0.57 mol) of hexamethylenediammonium adipate salt were poured with 138.0 g of demineralized water and antifoam in a stainless steel clave equipped with a mechanical stirrer with an internal thermometer. The clave atmosphere was purged with nitrogen, and the temperature was increased progressively to 220°C, with continuous stirring, letting pressure increase up to about 17.5 bar. The temperature was increased progressively up to 250°C, while maintaining the same level of pressure. The pressure was then progressively released while the temperature was increased to about 272°C and kept for 30 min at the same temperature under continuous stirring. The polymer was extruded in a strand, cooled in a water bath, and then pelletized. A semicristalline polymer was obtained with the following analytical data:
The polyamide had a melting point of 261°C, a crystallization temperature of 225°C, and a thermal degradation onset of 423°C, and a char at 500°C of 7%.

The viscosity number was 131 mL/g.

The melt viscosity at 280°C under 100s-1 was 180 Pa.s.

### Comparative Example 2: Production of a phosphorous containing PA6.6 copolymer.

Similarly to Comparative Example 1, 132.0 g (0.50 mol) of hexamethylenediammonium adipate salt, 14.6 g (0.04 mol) of Lunastab DDP and 15.3 g (0.04 mol) of hexamethylenediamine 32.2% aqueous solution were poured with 129.0 g of demineralized water and antifoam in a stainless steel clave and polycondensated up to 272°C and kept for 30 min at the same temperature under continuous stirring. The polymer was too fluid to be extruded in a strand and could not be pelletized. A semicristalline polymer was obtained with the following analytical data:
The polyamide had a melting point of 257°C, a crystallization temperature of 221°C, and a thermal degradation onset of 374°C, and a char at 500°C of 10%.

The viscosity number was 37 mL/g.

The melt viscosity at 280°C under 100s-1 was 1 Pa.s.

The phosphorous content was 0.9 %w.

### Production of PA6.6 based compounds

### Example 5: Production of flame-retardant PA6.6 compound

The PA6.6 pellets were cryogenic grinded below 1.5 mm and the powder was then dried at 90°C in a vacuum oven for one night. The polyamide from example 1 was roughly dry grinded.

Dry blend was then prepared with the powders of PA6.6 and polyamide according to Example 1 with the corresponding ratio 87.2% / 12.8% by weight, for 1% by weight end concentration of phosphorous.

The production of the compound was effected by melt blending with a twin-screw extruder of diameter D=11mm (L/D = 40) equipped by a water cooling bath and a pelletizer. The melt temperature was 260-290°C.

The compound thus obtained had the following analytical data:
The melting and crystallization temperatures were respectively 261°C and 227°C.

The viscosity number was 107 mL/g.

The char content at 500°C was 9%w.

The phosphorus content was 1%w.

The melt viscosity at 280°C under 100s-1 was 82 Pa.s.

### Example 6: Production of flame-retardant PA6.6 compound

Similarly to example 5, dry blend was prepared with the powders of PA6.6 and polyamide according to Example 2 with the corresponding ratio 83.1% / 16.9% by weight, for 1% by weight end concentration of phosphorous.

The compound thus obtained had the following analytical data:
The melting and crystallization temperatures were respectively 260°C and 227°C.

The viscosity number was 88 mL/g.

The char content at 500°C was 12%w.

The phosphorus content was 1%w.

The melt viscosity at 280°C under 100s-1 is 31 Pa.s.

### Comparative Example 3: Production of a PA6.6 compound

Done similarly to Example 5 with 100% by weight of PA6.6.

The compound thus obtained had the following analytical data:
The melting and crystallization temperatures were respectively 263°C and 234°C.

The viscosity number was 131 mL/g.

The melt viscosity at 280°C under 100s-1 is 180 Pa.s.

### Comparative Example 4: Production of a phosphorous containing PA6.6 compound

Done similarly to Example 5 with the component ratio PA6.6 / Ukanol FR 80 as follow 87.5% / 12.5% by weight, for 1% by weight end concentration of phosphorous. The Ukanol FR 80, already in powder, was used as such.

The compound thus obtained had the following analytical data:
The melting and crystallization temperatures were respectively 259°C and 233°C.

The phosphorus content was 1%w.

The viscosity number was 112 mL/g.

The melt viscosity at 280°C under 100s-1 is 60 Pa.s.

### Flame-Retardancy Test

Prior to flame-retardancy test, the compounds were shaped by melt compression. The comparative examples were selected such that a pure PA6.6 system (Comp. ex. 3) and a phosphorous containing PA6.6 system (Comp. ex. 4) were tested. At the same time, examples 5 and 6 according to the invention were tested, which comprised both PA6.6 and the flame retardant polyamide of the invention (respectively Ex. 1 and Ex. 2).

The experimental data which verify the positive properties of the described compounds are compiled in Table 1.

**Table 1**

| Composition | Comp. Ex. 3 | Comp. Ex. 4 | Ex. 5 | Ex. 6 |
|---|---|---|---|---|
| PA6.6 (% by weight) | 100.0% | 87.5% | 87.2% | 83.1% |
| FR80 (% by weight) | | 12.5% | | |
| Example 1 (% by weight) | | | 12.8% | |
| Example 2 (% by weight) | | | | 16.9% |
| Properties | | | | |
| VN (mL/g) | 131 | 112 | 107 | 88 |
| Tm (°C) | 263 | 259 | 261 | 260 |
| Tc (°C) | 234 | 233 | 227 | 227 |
| Melt viscosity at 280°C/100s-1 (Pa.s) | 180 | 60 | 82 | 31 |
| P-content (% by weight) | 0 | 1 | 1 | 1 |
| UL 94-V rating | V2 | V2 | V0 | V0 |
| t1 (s)^{a)} | 2 | 2 | 0 | 2 |
| t2 (s)^{b)} | 1 | 2 | 2 | 1 |
| tf (s)^{c)} | 16 | 19 | 8 | 15 |
| Cotton ignition | Yes | Yes | No | No |
| Burn up to the holding clamp | No | No | No | No |

| | | | | |
|---|---|---|---|---|
| ^{a)} flaming combustion time after first application of the test flame. ^{b)} flaming combustion time after the second removal of the test flame. ^{c)} total flaming combustion time for the 10 flame applications for each set of 5 specimens. | | | | |

It can be conclude from comparative example 1 and 2 that phosphorous containing PA6.6 copolycondensation of Comp. Ex. 2 leads to a dramatic loss of melt viscosity preventing any processability or applicability for such a polyamide.

Correspondingly to Table 1, only examples 5 and 6, containing the halogen-free flame-retardant polyamides according to the invention, have flame-retardant properties which fulfill V0 requirement, the best flame test rating according to UL 94-V, for 3mm thick samples. In particular the specimens do not drip flaming particles that ignite the dry absorbent surgical cotton located 300 mm below the test specimen.

It can be deduced from comparative example 4 in the table that using Ukanol FR 80 which is known as halogen-free polyester flame retardant in the prior art leads to insufficient flame-retardant properties, since the specimens drip flaming particles that ignite the dry absorbent surgical cotton located 300 mm below the test specimen. Comparative example 1 with virgin PA6.6 behaves similarly. Moreover they both show increased total flaming combustion time compared to the example according to the invention.

It can be concluded from these comparative tests that only with the halogen-free flame-retardant polyamide of the invention is the flame test according to UL 94-V V0 rated, while thermal characteristics of PA6.6 are maintained.

## Claims

1. Polymer, obtainable by polycondensation of
a) at least one phosphorous-containing monomer selected from adducts of
a1) 9,10-dihydro-9-oxa-10-phosphaphenanthrene-10-oxide (DOPO) and/or nuclear substituted DOPO derivatives, with
a2) at least one unsaturated di- or multivalent carboxylic acid or ester or anhydride thereof;
b) at least one secondary diamine; and
c) optionally other monomers.

2. Polymer according to claim 1 having a phosphorous content of at least 4 % by weight, preferably of at least 5 % by weight, more preferably of at least 7 % by weight, such as about 4 % to about 15 % by weight, preferably of about 5 % to about 9 % by weight, each of the total weight of the polymer.

3. Polymer according to claim 1 or 2, wherein the phosphorous-containing monomer a) is selected from a compound represented by the following general formula (I): 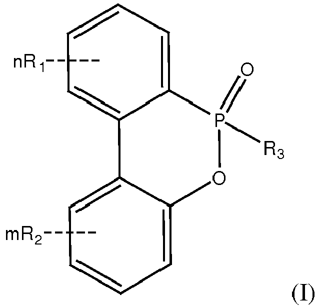
wherein n and m are integers from 0 to 4;
R₁ and R₂ are independently selected from alkyl, alkoxy, aryl, aryloxy and aralkyl, wherein, if more than one of R₁ and/or R₂ are present, each of these substituents can be identical or different to each other; and
R₃ denotes a residue derived from the unsaturated di- or multivalent carboxylic acid or ester or anhydride thereof;
preferably, wherein R₁ and R₂ are independently selected from C₁₋₈ alkyl and C₁₋₈ alkoxy; and n and m are independently 0 or 1.

4. Polymer according to any of the preceding claims, wherein the unsaturated di- or multivalent carboxylic acid or ester or anhydride thereof is a divalent carboxylic acid or ester or anhydride thereof which preferable is selected from the group consisting of itaconic acid, maleic acid, fumaric acid, endomethylene tetrahydrophthalic acid, citraconic acid, mesaconic acid, and tetrahydrophthalic acid and esters and anhydrides thereof;
preferably, wherein the unsaturated divalent carboxylic acid is selected from itaconic acid, maleic acid and anhydrides thereof.

5. Polymer according to any of the preceding claims, wherein the secondary diamine b) is a compound represented by the following general formula (II): 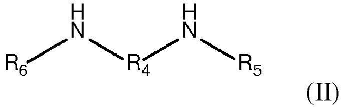 wherein R₄, R₅ and R₆ independently represent hydrocarbon residues which may contain one or more heteroatoms and which may form one or more rings with themselves or any of each other of R₄, R₅ and/or R₆.

6. Polymer according to claim 5, wherein R₄, R₅ and R₆ independently represent aryl, heteroaryl or linear, branched and/or cyclic C₁₋₃₀ alkyl residues, or any combination thereof, wherein the C₁₋₃₀ alkyl residues may be substituted or interrupted by one or more heteroatoms and/or one or more aryl groups.

7. Polymer according to claim 5 or 6, wherein R₄ is arylene or linear, branched and/or cyclic C₁₋₂₀ alkylene, or any combination thereof, wherein the C₁₋₂₀ alkylene may be interrupted by one or more heteroatoms, preferably selected from N and O, wherein, if the heteroatom is N, it preferably forms a tertiary amine, more preferably -N(C₁₋₆ alkyl)-.

8. Polymer according to any of claims 5 to 7, wherein R₅ and R₆ independently represent aryl, C₁₋₃ alkylaryl, or linear, branched and/or cyclic C₁₋₆ alkyl, or wherein R₅ and R₆ together have 1 to 3 carbon atoms and form a ring together with -NH-R₄-NH-, or wherein R₄ and/or R₅ represent a C₁₋₃alkylene residue forming a ring together with R₄.

9. Polymer according to any of the preceding claims, wherein the secondary diamine b) is selected from the group consisting of 4,4'-bipiperidine, piperazine, 4,4'-ethylenedipiperidine, N,N'-dimethyl-1,6-hexanediamine, N,N'-dimethyl-1,8-octanediamine, N,N'-diethyl-1,3-propanediamine, N,N'-dimethyl-1,3-propanediamine, N,N'-diisopropyl-1,3-propanediamine, N,N'-diethylethylenediamine, N,N'-dimethylethylenediamine, N,N'-diisopropylethylenediamine, N,N'-diphenylethylenediamine, N,N'-dibenzylethylenediamine, trans-N,N'-dimethylcyclohexane-1,2-diamine, N,N-bis[3-(methylamino)propyl]methylamine, and 4,4'-trimethylenedipiperidine, or salt thereof or mixture thereof.

10. Polymer according to any of the preceding claims comprising repeating units represented by the following general formula (III): 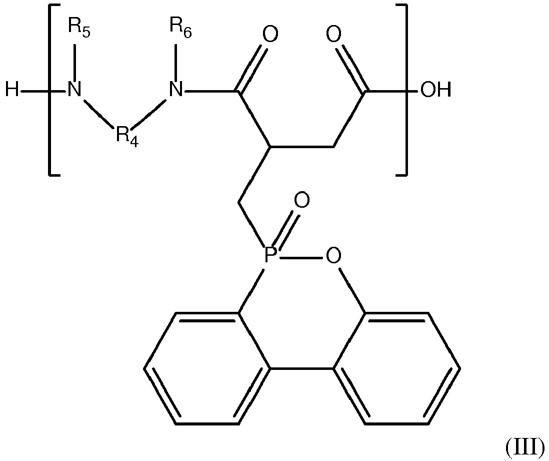 wherein R₄, R₅ and R₆ are defined as in claims 5 to 8.

11. Method of preparing a polymer according to any of claims 1-10, wherein the method comprises the steps of
a) reacting 9,10-dihydro-9-oxa-10-phosphaphenanthrene-10-oxide (DOPO) and/or nuclear substituted derivatives thereof with at least one unsaturated di- or multivalent carboxylic acid or ester or anhydride thereof to obtain a first phosphorous-containing monomer;
b) reacting the first phosphorous-containing monomer obtained in step a) with at least one secondary diamine, and optionally other monomers; and
c) optionally carrying out the reaction step b) in the presence of at least one monovalent carboxylic acid and/or monovalent secondary amine and/or reacting the polymer obtained in step b) with at least one monovalent carboxylic acid and/or monovalent secondary amine to obtain an end-capped polymer.

12. Thermoplastic polymer composition comprising a thermoplastic polymer and a polymer according to any of claims 1-10, wherein the thermoplastic polymer is preferably selected from the group consisting of polyamides, polyphthalamides, polyesters including unsaturated polyester resins, polysulfones, polyimides, polyolefins, polyacrylates, polyether etherketones, acrylnitril butadiene styrenes (ABS), polyurethanes, polystyrenes, polycarbonates, polyphenylene oxides, phenolic resins and mixtures thereof.

13. Thermoplastic polymer composition according to claim 12, wherein the thermoplastic polymer is at least one polyamide, preferably at least one polyamide selected from the group consisting of PA6.6, PA6, PA6.10, PA6.12, PA MXD.6, PA11, PA12, PA6.6/6, P6.6/6.T, and mixtures thereof.

14. Thermoplastic polymer composition according to claim 12 or 13, which comprises at least 0.1 % by weight, preferably from about 0.1 % by weight to about 30 % by weight, more preferably from about 2 % by weight to about 25 % by weight, and even more preferably from about 6 % by weight to about 20 % by weight of the polymer according to any of claims 1 to 10, each based on the total weight of the of the thermoplastic polymer composition.

15. Use of the polymer according to any of claims 1-10 as flame-retardant polymer.
